(19) Europäisches Patentamt
European Patent Office
Office européen des brevets

(11) **EP 2 585 525 B1**

(12) **EUROPEAN PATENT SPECIFICATION**

(45) Date of publication and mention
of the grant of the patent:
**05.10.2016 Bulletin 2016/40**

(21) Application number: **10853809.1**

(22) Date of filing: **25.06.2010**

(51) Int Cl.:
***C08L 9/06*** *(2006.01)*    ***C08L 19/00*** *(2006.01)*
***C08L 57/02*** *(2006.01)*

(86) International application number:
**PCT/US2010/040021**

(87) International publication number:
**WO 2011/162771 (29.12.2011 Gazette 2011/52)**

(54) **LOW ROLLING RESISTANCE TREAD FOR CARS AND LIGHT TRUCKS**

REIFENPROFIL MIT GERINGEM ROLLWIDERSTAND FÜR AUTOS UND LEICHT-LKW

BANDE DE ROULEMENT À FAIBLE RÉSISTANCE AU ROULEMENT POUR VOITURES ET
UTILITAIRES LÉGERS

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**01.05.2013 Bulletin 2013/18**

(73) Proprietors:
• **MICHELIN Recherche et Technique S.A.
1763 Granges-Paccot (CH)**
• **Compagnie Générale des Etablissements
Michelin
63000 Clermont-Ferrand (FR)**

(72) Inventor: **THOMPSON, William, Marshall
Simpsonville
SC 29680 (US)**

(74) Representative: **Dossmann, Gérard
Casalonga & Partners
Bayerstrasse 71-73
80335 München (DE)**

(56) References cited:
**EP-A1- 0 786 493**    **WO-A1-2004/022644**
**WO-A1-2004/024813**    **US-A- 5 811 479**
**US-A1- 2005 187 340**    **US-A1- 2010 139 825**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

BACKGROUND OF THE INVENTION

Field of the Invention

This invention relates generally to tires and more particularly to the treads of tires that are suitable for use on passenger ears and light trucks.

Description of the Related Art

A tire tread is required to provide a certain number of often conflicting technical requirements, including low rolling resistance, good wear resistance and good traction on dry roads, wet roads and roads that may be covered with snow and/or melting ice, Tires having low rolling resistance have become of more interest due to the priorities placed upon fuel conservation and protection of the environment.
Such interests are held not only by those who run large fleets of heavy vehicles, such as trucks and buses, but also by those who operate their own cars and/or light trucks, Therefore, there is an interest in providing tires for cars and light trucks, such as pickup trucks, that conserve fuel by being built of materials that possess a low level of hysteresis and may therefore be characterized as having low rolling resistance.
Providing tires that have good wear properties, low hysteresis or rolling resistance and good traction on wet, dry and icy roads are conflicting goals because the increase in one of these properties often results in a decrease of one or more of the other desirable properties. It remains, however, a goal of tire designers to provide tires that are better in each of these categories.
A vehicle tire is made up of a number of parts or components, each of which has a specific function to perform in the tire. Typically a tire includes a pair of beads in the form of hoops for anchoring the ply and for providing a means for locking the tire onto the wheel assembly. The ply, extending from bead to bead, is comprised of cords that serve as the primary reinforcing material in the tire casing. The tire further includes belts extending circumferentially around the tire under the tread for stiffening the casing and the tread. The tread is located on the outer circumference of the tire above the belts and is that portion of the tire that contacts the road or other driving surface. The sidewall of the tire protects the ply or plies from road hazards and ozone and is typically the outermost rubber component of the tire extending between the tread and the beard.

SUMMARY OF THE INVENTION

Embodiments of the present invention include tires, and especially tires for passenger and light truck vehicles, that have treads constructed of a material that is based upon a cross-linkable rubber composition, Particular embodiments of the cross-linkable rubber composition include, per hundred parts by weight of rubber (phr), between 50 phr and 90 phr of natural rubber and between 10 phr and 50 phr of a silanol end-functionalized styrene-butadiene rubber.
In addition to the elastomers, the rubber composition may include between 5 phr and 40 phr of a plasticizing resin. The plasticizing resin may be characterized as having a glass transition temperature Tg of between 30 °C and 120 °C or alternatively, between 45 °C and 85 °C. The plasticizing resin may be a polylimonene resin.
Additionally, the rubber composition may include between 40 phr and 75 phr of a silica filler, which may be a highly dispersible precipitated variety of silica filler.
The foregoing and other objects, features and advantages of the invention will be apparent from the following more detailed descriptions of particular embodiments of the invention.

DETAILED DESCRIPTION OF PARTICULAR EMBODIMENTS,

Embodiments of the present invention include treads for the fires of passenger and light truck vehicles. These embodiments therefore exclude the treads on heavy vehicles, such as trucks and buses. More particularly, these treads are based upon rubber compositions that include natural rubber, silica, a plasticizing resin having a high glass transition temperature (Tg) and a silanol end-functionatized styrene-butadiene rubber (SBR). Surprisingly, adding the silanol end-functionalized SBR to a rubber composition having the high Tg resin provides an improvement in both the rolling resistance of a tire having tread made from such a composition and its wet and dry traction.
It should be noted that the term "based upon" as used above and throughout this disclosure recognizes that embodiments of the present invention are made of vulcanized or cured rubber compositions that were, at the time of their assembly, uncured. The cured rubber composition is therefore "based upon" the uncured rubber composition. In other words, the cross-linked rubber composition is based upon the cross-linkable rubber composition.

The rubber elastomers that are included in embodiments of the present invention include natural rubber and the silanol end-functionalized SBR. It should be noted that the invention requires the use of the functionalized SBR because the improved physical properties obtained with the invention are not obtained with rubber compositions using a non-functionalized SBR rather than the functionalized SBR. Silanol end-functionalized elastomers are well known in the industry. Examples of such materials and their methods of making may be found in US Patent No, 6,013,718, issued January 11, 2000.

The silanol end-functionalized SBR used in particular embodiments of the present invention may be characterized as having a glass transition temperature Tg of between -50 °C and -10 °C or alternatively, between -40 °C and -15 °C or between -30 °C and -20 °C as determined by differential scanning calorimetry (DSC) according to ASTM ET356. The styrene content, for example, may be between 15 % and 30 % by weight or alternatively between 20 % and 30 % by weight with the vinyl content of the butadiene part, for example, being between 25 % and 70 % or alternatively, between 40 % and 65 % or between 50 % and 60 %.

The rubber compositions used to make the low rolling resistance treads include between 50 phr and 90 phr of natural rubber and between 10 phr and 50 phr of the silanol end-functionalized SBR. Alternatively, embodiments of the present invention may be made of rubber compositions having between 60 phr and 85 phr of natural rubber or between 65 phr and 85 phr of natural rubber. Embodiments may also include rubber compositions having between 15 phr and 40 phr of the silanol end-functionalized SBR or between 15 phr and 35 phr of such SBR.

While some embodiments may include some quantity of other highly unsaturated diene rubber compositions, there are some embodiments that contain no other rubber components at all other than the silanol end-functionahzed SBR and the natural rubber. It should be noted that essentially saturated diene rubbers are not included in the embodiments of the present invention. In some embodiments of the present invention, the rubber compositions include no essentially unsaturated diene elastomers that are not highly unsaturated,

To further explain, in general, client elastomers or rubber are those elastomers resulting at least in part (*i.e., a* homopolymer or a copolymer) from diene monomers (monomers bearing two double carbon-carbon bonds, whether conjugated or not). Essentially unsaturated diene elastomers are understood to mean those diene elastomers that result at least in part from conjugated diene monomers, having a content of members or units of diene origin (conjugated dienes) that are greater than 15 mol.%.

Thus, for example, diene elastomers such as butyl rubbers, nitrile rubbers or copolymers of dienes and of alpha-olefins of the ethylene-propylene diene terpolymer (EPDM) type or the ethylene-vinyl acetate copolymer type do not fall within the preceding definition, and may in particular be described as "essentially saturated" diene elastomers (low or very low content of units of diene origin, *i.e.*, less than 15 mol. %).

Within the category of essentially unsaturated diene elastomers are the highly unsaturated diene elastomers, which are understood to mean in particular diene elastomers haying a content of units of diene origin (conjugated dienes) that is greater than 50 mol, %. Examples of highly unsaturated elastomers include polybutadienes (BR), polyisoprenes (IR), natural rubber (NR), butadiene copolymers, isoprene copolymers and mixtures of these elastomers. The polyisoprenes include, for example, synthetic cis-1,4 polyisoprene, which may be characterized was possessing cis-1,4 bonds of more than 90 mol, % or alternatively, of more than 98 mol. %.

Other examples of highly unsaturated dienes include styrene-butadiene copolymers (SBR), butadiene-isoprene copolymers (BIR), isoprene-styrene copolymers (SIR) and isoprene-butadiene-styrene copolymers (SBIR) and mixtures thereof. Of course the silanol end-functionalized SIR that is a required component of the rubber compositions of the present invention is a highly unsaturated diene.

Other highly unsaturated dienes utilized in particular embodiments of the present invention may also be functionalized. These elastomers can be functionalized by reacting them with suitable functionalizing agents prior to or in lieu of terminating the elastomer. Exemplary functionalizing agents include metal halides, metalloid halides, alkoxysilanes, imine-containing compounds, esters, ester-carboxylate metal complexes, alkyl ester carboxylate metal complexes, aldehydes or ketones, amides, isocyanates, isothiocyanates, imines, and epoxides. These types of functionalized elastomers are known to those of ordinary skill in the art. While particular embodiments may include one or more of these functionalized elastomers, other embodiments may include one or more of these functionalized elastomers mixed with one or more of the non-functionalized highly unsaturated elastomers as known to those having ordinary skill in the art while other embodiments include no other functionalized elastomers other than the silanol end-functionalized SBR.

In addition to the elastomers, particular embodiments of the rubber compositions useful in the present invention include a high Tg plasticizing resin. A plasticizing resin is known to one having ordinary skill in the art as a compound that is solid at ambient temperature, *e.g.*, about 25 °C, and is miscible in the rubber composition at the level used, typically over 5 parts per hundred parts of rubber by weight (phr) so that it acts as a true diluting agent. Thus, a plasticizing resin should not be confused with a "tackifying" resin, which is generally used at a lower lever, *e.g.*, typically less than 5 phr, and is typically immiscible and thus intended to migrate to the surface to give tack to the rubber composition,

Plasticizing resins have been widely described in the patent literature and also, for example, in the work entitled "Hydrocarbon Resins" by R. Mildenberg, M. Zander and G. Collin (New York, VCH, 1997, ISBN 3-527-28617-9). In particular, chapter 5 of this work is devoted to the applications for plasticizing resins, including their applications in the tire rubber field (5.5. "Rubber Tires and Mechanical Goods").

Plasticizing resins are preferably exclusively hydrocarbon resins, comprised only of carbon and hydrogen atoms, and may be of the aliphatic type, aromatic type or aliphatic/aromatic type depending on the monomers (aliphatic or aromatic) that make up the resins. The resins may be naturally occurring or they be may be synthetic; those that are petroleum-based may be called petroleum resins.

Particular embodiments of the present invention include hydrocarbon plasticizing resins exclusively that may be characterized as having at least one, but preferably all, of the following physical properties: a Tg greater than 30 °C, a number average molecular weight (Mn) of between 400 and 2000 g/mol, and a polydispersity index (PI) of less than 3, wherein PI = Mw/Mn and Mw is the weight-average molecular weight of the resin. Alternatively, the resin may include at least one or preferably all of the following characteristics; a Tg greater than 40 °C, a number average molecular weight (Mn) of between 500 and 1500 g/mol, and a polydispersity index (PI) of less than 2. Therefore, in particular embodiments, the Tg may range between 30 °C and 120 °C or alternatively between 40 °C and 100 °C or between 45 °C and 85 °C,

The glass transition temperature Tg is measured by DSC (differential Scanning Calorimetry) according to Standard ASTM D3418 (1999). The macrostructure (Mw, Mn and PI) of the hydrocarbon resign may be determined by size exclusion chromatography (SEC): solvent tetrahydrofuran; temperature 35 °C; concentration 1 g/l; flow rate 1 ml/min; solution filtered through a filter with a porosity of 0.45 $\mu$m before injection; Moore calibration with polystyrene standards; set of 3 "Waters" columns in series ("Styragel" HR4E, HR1 and HR0.5); detection by differential refractometer ("Waters 2410") and its associated operating software ("Waters Empower").

Examples of suitable plasticizing resins for use in the present invention include cyclopentadiene (abbreviated to CPD) or dicyclopentadiene (abbreviated to DCPD) homopolymer or copolymer resins, terpene homopolymer or copolymer resins and $C_5$ fraction homopolymer or copolymer resins. Such resins may be used, for example, singly or in combination.

Suitable plasticizing resins are readily available and well known by those having ordinary skill in the art. For example, polylimonene resins are available from DRT under the name Dercolyte L120, which has a Mn of 625 g/mol, an Mw of 1010 g/mol, a PI of 1.6 and a Tg of 72 °C, or from Arizona Chemical Company under the name Sylvagum TR7125C, which has a Mn of 630 g/mol, an Mw of 950 g/mol, a P1 of 1.5 and a Tg of 70 °C.

$C_5$ fraction/vinylaromatic resins, in particular $C_5$ fraction/styrene or $C_5$ fraction/$C_9$ fraction copolymer resins are available from Neville Chemical Company under the names Super Nevtac. 78, Super Nevtac 85 or Super Nevtac 99, from Goodyear Chemicals under the name Wingtack Extra, from Kolon under the names Hikorez T1095 and "Hikorez T1100", or from Exxon under the names Escorez 2101, Excorez 1102 and ECR 373.

Particular embodiments, of the present invention include an amount of plasticizing resin of between 5 phr and 60 phr. Below the minimum indicated, the targeted technical effect may prove to be inadequate while, above 60 phr, the tackiness of the compositions in the raw state, with regard to the mixing devices, can in some cases become totally unacceptable from the industrial viewpoint. Alternatively, particular embodiments include between 5 phr and 40 phr, between 10 and 30 phr or between 10 and 25 phr of the plasticizing resin.

Because the plasticizing resins have been included in the rubber compositions of the present invention, particular embodiments may include no plasticizing oils. Such oils are well known to one having ordinary skill in the art, are generally extracted from petroleum, and are classified as being paraffinic, aromatic or naphthenic type processing oil and include MES and TDAE oils. Examples of other such plasticizing oils include, for example, sunflower oil, rapeseed oil and other naturally occurring oils.

Particular embodiments of the present invention further include silica as reinforcing filler. The silica may be any reinforcing silica known to one having ordinary skill in the art, in particular any precipitated or pyrotenic silica having a BET surface area and a specific CTAB surface area both of which are less than 450 m$^2$/g or alternatively, between 30 and 400 m$^2$/g. Particular embodiments include a silica having a CTAB of between 80 and 200 m$^2$/g, between 100 and 190 m$^2$/g, between 120 and 190 m$^2$/g or between 140 and 180 m$^2$/g. The CTAB specific surface area is the external surface area determined in accordance with Standard AFNOR-NFT-45007 of November 1987.

Particular embodiments of the rubber compositions used in the tire treads of the passenger and light truck vehicles have a BET surface area of between 60 and 250 m$^2$/g or alternatively, of between 80 and 200 m$^2$/g. The BET specific surface area is determined in known manner, in accordance with the method of Brunauer, Emmet and Teller described in "The Journal of the American Chemical Society", vol. 60, page 309, February 1938, and corresponding to Standard AFNOR-NFT-45007 (November 1987).

The silica used in particular embodiments may be further characterized as having a dibutylphthlate (DHP) absorption value of between 100 and 300 ml/100 g or alternatively between 150 and 250 ml/100 g.

Highly dispersible precipitated silicas (referred to as "HD") are used exclusively in particular embodiments of the disclosed rubber composition, wherein "highly dispersible silica" is understood to mean any silica having a substantial ability to disagglomerate and to disperse in an elastomeric matrix. Such determinations may be observed in known manner by electron or optical microscopy on thin sections. Examples of known highly dispersible silicas include, for example, Perkasil KS 430 from Akzo, the silica BV3380 from Degussa, the silicas Zeosil 1165 MP and 1115 MP from Rhodia, the silica Hi-Sil 2000 from PPG and the silicas Zeopol 8741 or 8745 from Huber.

Particular embodiments of the present invention include little or no carbon black or other reinforcement fillers. For those embodiments that include adding a silane coupling agent that is commercially available on a carbon black substrate, up to about 50 wt. % of the commercial coupling agent weight is carbon black. The rubber compositions having such amounts of carbon black may be characterized as having essentially no carbon black. Some embodiments may include up to 10 phr, or up to 5 phr of carbon black just to provide a typical black coloring of the rubber composition.

The amount of silica added to the rubber composition disclosed herein is between 45 and 110 phr or alternatively between 45 and 80 phr, between 45 and 70 phr, between 45 and 65 phr or between 50 and 70 phr.

In addition to the silica added to the rubber composition, a proportional amount of a silane coupling agent is also added to the rubber composition, *e.g.*, between 5 % and 10 % of the silica loading. The silane coupling agent is a sulfur-containing organosilicon compound that reacts with the silanol groups of the silica during mixing and with the elastomers during vulcanization to provide improved properties of the cured rubber composition. A suitable coupling agent is one that is capable of establishing a sufficient chemical and/or physical bond between the inorganic filler and the diene elastomer, which is at least bifunctional, having, for example, the simplified general formula "Y-T-X", in which: Y represents a functional group ("Y" function) which is capable of bonding physically and/or chemically with the inorganic filler, such a bond being able to be established, for example, between a silicon atom of the coupling agent and the surface hydroxyl (OH) groups of the inorganic filter (for example, surface silanol in the case of silica); X represents a functional group ("X" function) which is capable of bonding physically and/or chemically with the diene elastomer, for example by means of a sulfur atom; T represents a divalent organic group making it possible to link Y and X.

Examples of suitable sulfur-containing organosilicon silane coupling agents include 3,3'-bis(triethoxysilylpropyl) disulfide and 3,3'-bis(triethoxy-silylpropyl) tetrasulfide. Both of these are available commercially from Degussa as X75-S and X50-S respectively, though not in pure form. Both of these commercially available products include the active component mixed 50-50 by weight with a N330 carbon black. Other examples of suitable silane coupling agents include 2,2'-bis(triethoxysilylethyel) tetrasulfide, 3,3'-bis(tri-t-butoxy-silylpropyl) disulfide and 3,3'-bis(di t- butylmethoxysilylpropyl) tetrasulfide. Examples of silane coupling agents having just one silicon atom in the silane molecule include, for example, 3,3'(triethoxysilylpropyl) disulfide and 3,3' (triethoxy-silylpropyl) tetrasulfide.

The rubber compositions disclosed herein are cured with a sulfur curing system that topically includes sulfur and an accelerator. Suitable free sulfur includes, for example, pulverized sulfur, rubber maker's sulfur, commercial sulfur, and insoluble sulfur, The amount of free sulfur included in the rubber composition may range between 0.5 and 3 phr of alternatively between 0.8 and 2.5 phr or between 1 and 2 phr.

Use may be made of any compound capable of acting as curing accelerator in the presence of sulfur, in particular those chosen from the group consisting of 2-mercaptobenzothiazyl disulphide (MTBS), diphenyl guanidine (DPG), N-cyclohexyl-2-benzothiazolesulphenamide (CBS), N,N'-dicyclobexyl-2-benzothiazolesulphenamide (DCBS), N-tert-butyl-2-benzo-thiazole-sulphenamide (TBBS), N-tert-butyl-2-benzothiazolesulphenimide (TBSI) and the mixtures of these compounds. In particular embodiments, a primary accelerator of the sulphenamide type or guanidine type is used.

Other additives can be added to the rubber composition disclosed herein as known in the art. Such additives may include, for example, some or all of the following: antidegradants, antioxidants, fatty acids, pigments, waxes, stearic acid, zinc oxide and other accelerators. Examples of antidegradants and antioxidants include 6PPD, 77PD, IPPD and TMQ and may be added to rubber compositions in an amount of from 0.5 and 5 phr. Zinc oxide may be added in an amount of between 1 and 6 phr or 2 and 4 phr. Other components that may optionally be added has known to one having ordinary skill in the art include, for example, methylene acceptors, *e.g.*, phenolic novolak resin or methylene donors, *e.g.*, HMT or H3M), vulcanization accelerators, vulcanization activators or antireversion agents.

The invention is further illustrated by the following examples, which are to be regarded only as illustrations and not delimitative of the invention in any way. The properties of the compositions disclosed in the examples were evaluated as described below.

Moduli of elongation (MPa) were measured at 10% (MA10), 100% (MA 100) and at 300% (MA300) at a temperature of 23 °C based on ASTM Standard D412 on dumb bell test pieces. The measurement were taken in the second elongation; *i.e.*, after an accommodation cycle. These measurements are secant module in MPa, based on the original cross section of the test piece.

Hysteresis losses (HL) were measured in percent by rebound at 60 °C at the sixth impact in accordance with the following equation:

$$\text{HL (\%)} = 100\,(W_0 - W_1)/W_1,$$

where $W_0$ is the energy supplied and $W_1$ is the energy restored.

The rolling resistance (RR) of a tire is measured on a test drum according to the SAVE 1269 test method. The tire is tested on the test drum at 80 kph and 70 % of the maximum rated load. A value greater than that of the control, arbitrarily set at 100, indicates an improved result, *i.e.*, a lower rolling resistance,

The dry grip performance (DG) of a tire mounted on an automobile fitted with an ABS braking system is measured by determining the distance necessary to go from 60 mph to a complete stop upon sudden braking on a dry asphalt surface. A value greater than that of the control, which is arbitrarily set to 100, indicates an improved result, *i.e.*, a shorter braking distance and improved dry grip.

The wet braking performance (WB) of a tire mounted on an automobile fitted with an ABS braking system is measured by determining the distance necessary to go from 40 mph to a complete stop upon sudden braking on a wetted (no puddles) asphalt surface. A value greater than that of the control, which is arbitrarily set to 100, indicates an improved result, *i.e.*, a shorter braking distance indicating improved wet grip.

The grip on snow-covered ground is evaluated by measuring the forces on a single driven test tire in snow according to the ASTM F1805 test method. The vehicle travels at a constant 5 mph speed and the forces are measured on the single test tire at the target slip. A value greater than that of the Standard Reference Test Tire (SRTT), which is arbitrarily set to 100, indicates an improved result, *i.e.*, improved grip on snow.

**Examples**

These examples demonstrate the improved grip and rolling resistance of tire treads made from compounds having the silanol end-functionalized styrene-butadiene rubber and the high Tg resin over those made from a tire marketed as having good rolling resistance.

Two thermochemical stages were used to prepare the rubber compositions F1 through F3 having the material components shown in Table 1 (amounts shown in phr), First, the elastomers, 2/3 of the silica and all of the other ingredients except for the remaining silica and vulcanization agents were introduced into a 50 liter Banbury-type mixer in the amounts shown in Table 1, After approximately 30 seconds, the remaining 1/3 of the silica was added and the maternal was mixed until a temperature was reached between 145 °C and 170 °C. The mixture was then dropped and cooled to a temperature below 100°C.

In the second thermochemical stage, the cooled mixture was transferred to a milt having two cylinders that operated at a speed of 30 RPM. The vulcanizing agents were added and mixing continued until the vulcanizing agents were well dispersed. The rubber compositions were rolled into sheets and cured for the 30 minutes at a temperature of 150 °C for all the materials.

Table 1 - Rubber Formulations (phr)

| Formulations | F1 | F2 | F3 |
|---|---|---|---|
| Natural Rubber | 100 | 75 | 50 |
| Silanol End-Fuctionalized SBR | | 25 | 50 |
| Silica | 55 | 55 | 55 |
| Carbon Black | 5 | 5 | 5 |
| High Tg Resin | 18 | 18 | 18 |
| Coupling Agent (SI69)[†] | 4.13 | 4.13 | 4.13 |
| Paraffin | 1.5 | 1.5 | 1.5 |
| Zinc Oxide | 2 | 2 | 2 |
| Sulfur | 1.3 | 1.3 | 1.3 |
| Accelerators | 3.08 | 3.08 | 3.08 |
| Stearic Acid | 2 | 2 | 2 |
| Antidegradants | 1.95 | 1.95 | 1.95 |
| [†] 3,3'-bis(triethoxy-silylpropyl) tetrasulfide | | | |

The silanol end-functionalized SBR had a Tg of -24 °C with 25 % styrene and 58 % vinyl content. The high Tg resin was Sylvares TR 5147 from Arizona Chemical, a terpene resin having a Tg of 72 °C. The carbon black was a 300 series black. The silica was a ZEOSIL 160, highly dispersible silica available from Rhodia. The accelerators were n-cyclohexyl -2-benzothiazole sulfenamide (CBS) and diphenylguanidine (DPG). There were no plasticizing oils added to the formulations.

The cured sheets were of the rubber formulations F1 through F3 were cut into testing pieces suitable for the testing methods utilized to determine the physical characteristics of the examples. The witness material was a tread compound used for treads marketed as having low rolling resistance. This material was based on butadiene/non-functionalized SBR rubber mixture. The physical properties of these materials are shown in Table 2.

Table 2 - Physical Properties of Rubber Formulations

| Physical Properties | W1 | F1 | F2 | F3 |
|---|---|---|---|---|
| MA10, MPa | 4.66 | 3.77 | 3.64 | 3.70 |
| MA100, MPa | 1.83 | 1.75 | 1.82 | 1.92 |
| MA300, MPa | 2.33 | 1.83 | 1.96 | 2.15 |
| Hysteresis Loss (%) | 24.9 | 12.6 | 14.1 | 13.5 |

Tires were manufactured (P225/50R17 93T TL ENERGY LX4) using the formulations shown above to form the treads. They were tested using the testing procedures described above. The tires were mounted on a 2009 Honda Accord LX car.

Table 3 - Tire Results

| Tire Tests | W1 | F1 | F2 | F3 |
|---|---|---|---|---|
| Rolling Resistance (Index) | 100 | 134 | 127 | 122 |
| Wet Grip (Index) | 100 | 94 | 104 | 110 |
| Dry Grip (Index) | 100 | 100 | 100 | 102 |
| Snow Grip (Index) | 100 | 113 | 81 | 55 |

The test results show that when the silanol end-functionalized SBR rubber were utilized in the tread compound, the tires surprisingly showed a significant improvement in rolling resistance without a loss in either wet or dry grip.

The terms "comprising," "including," and "heaving," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

## Claims

1.  A tire, the tire comprising a tread constructed of a material that is based upon a crosslinkable rubber composition, the cross-linkable rubber composition comprising, per 100 parts by weight of rubber (phr):

    between 50 phr and 90 phr of natural rubber;
    between 10 phr and 50 phr of a silanol end-functionalized styrene-butadiene rubber;
    between 5 phr and 40 phr of a plasticizing resin having a glass transition temperature Tg of between 30 °C and 120 °C; and
    between 40 phr and 75 phr of a silica filler.

**2.** The tire of claim 1, wherein the rubber composition comprises between 65 phr and 85 phr of the natural rubber and between 15 phr and 35 phr of the silanol end-functionalized styrene-butadiene rubber.

**3.** The tire of claim 1, wherein the styrene-butadiene rubber has a glass transition temperature of between -50 °C and -10 °C.

**4.** The tire of claim 1, wherein the styrene-butadiene rubber has a glass transition temperature of between -30 °C and -20 °C.

**5.** The tire of claim 1, wherein the styrene-butadiene rubber has a vinyl content of the butadiene part of between 25 % and 70 %.

**6.** The tire of claim 1, wherein the resin has a number average molecular weight of between 400 and 2000 g/mol and a polydispersity index of less than 3.

**7.** The tire of claim 1, wherein the resin has a Tg of between 40 °C and 100 °C.

**8.** The tire of claim 1, wherein the resin has a Tg of between 45 °C and 85 °C.

**9.** The tire of claim 1, wherein the resin is a polylimonene.

**10.** The tire of claim 1, wherein the resin is a hydrocarbon resin.

**11.** The tire of claim 1, wherein the rubber composition comprises between 45 phr and 65 phr of a highly dispersible precipitated silica.

**12.** The tire of claim 1, wherein the rubber composition comprises between 10 phr and 30 phr of the a plasticizing resin.

**13.** The tire of claim 1, wherein the rubber composition comprises between 10 phr and 25 phr of the a plasticizing resin.

**14.** The tire of claim 1, wherein the tire is an automobile/light truck tire.


**Patentansprüche**

**1.** Reifen, wobei der Reifen eine Lauffläche umfasst, die aus einem Material aufgebaut ist, das auf einer vernetzbaren Kautschukzusammensetzung beruht, wobei die vernetzbare Kautschukzusammensetzung, auf 100 Masseanteile Kautschuk (phr), Folgendes umfasst:

zwischen 50 phr und 90 phr an Naturkautschuk,
zwischen 10 phr und 50 phr an silanolende-funktionalisiertem Styren-Butadien-Kautschuk,
zwischen 5 phr und 40 phr eines weichmachenden Harzes, das eine Glasübergangstemperatur Tg von zwischen 30 °C und 120 °C hat, und
zwischen 40 phr und 75 phr eines Silikafüllstoffs.

**2.** Reifen nach Anspruch 1, wobei die Kautschukzusammensetzung 65 phr und 85 phr des Naturkautschuks und zwischen 15 phr und 35 phr des silanolende-funktionalisierten Styren-Butadien-Kautschuks umfasst.

**3.** Reifen nach Anspruch 1, wobei der Styren-Butadien-Kautschuk eine Glasübergangstemperatur von zwischen -50 °C und -10 °C hat.

**4.** Reifen nach Anspruch 1, wobei der Styren-Butadien-Kautschuk eine Glasübergangstemperatur von zwischen -30 °C und -20 °C hat.

**5.** Reifen nach Anspruch 1, wobei der Styren-Butadien-Kautschuk einen Vinylgehalt des Butadienteils von zwischen 25 % und 70 % hat.

**6.** Reifen nach Anspruch 1, wobei das Harz eine zahlengemittelte relative Molekülmasse von zwischen 400 und 2000 g/mol und einen Polydiversitätsindex von weniger als 3 hat.

7. Reifen nach Anspruch 1, wobei das Harz eine TG von zwischen 40 °C und 100 °C hat.

8. Reifen nach Anspruch 1, wobei das Harz eine TG von zwischen 45 °C und 85 °C hat.

9. Reifen nach Anspruch 1, wobei das Harz ein Polylimonen ist.

10. Reifen nach Anspruch 1, wobei das Harz ein Kohlenwasserstoffharz ist.

11. Reifen nach Anspruch 1, wobei die Kautschukzusammensetzung zwischen 45 phr und 65 phr eines hoch dispergierbaren gefällten Silika umfasst.

12. Reifen nach Anspruch 1, wobei die Kautschukzusammensetzung zwischen 10 phr und 30 phr des weichmachenden Harzes umfasst.

13. Reifen nach Anspruch 1, wobei die Kautschukzusammensetzung zwischen 10 phr und 25 phr des weichmachenden Harzes umfasst.

14. Reifen nach Anspruch 1, wobei der Reifen ein Automobil-/Leichtlastkraftwagenreifen ist.


**Revendications**

1. Pneumatique, lequel pneumatique comporte une bande de roulement faite d'un matériau à base d'une composition de caoutchouc réticulable, laquelle composition de caoutchouc réticulable contient, pour cent parties en poids de caoutchouc (pcpc) :

   - entre 50 et 90 pcpc de caoutchouc naturel,
   - entre 10 et 50 pcpc d'un caoutchouc de styrène-butadiène à groupes fonctionnels terminaux de type silanol,
   - entre 5 et 40 pcpc d'une résine plastifiante dont la température de transition vitreuse (Tv) se situe entre 30 et 120 °C,
   - et entre 40 et 75 pcpc d'une charge de silice.

2. Pneumatique conforme à la revendication 1, dans lequel la composition de caoutchouc comprend entre 65 et 85 pcpc de caoutchouc naturel et entre 15 et 35 pcpc de caoutchouc de styrène-butadiène à groupes fonctionnels terminaux de type silanol.

3. Pneumatique conforme à la revendication 1, dans lequel le caoutchouc de styrène-butadiène présente une température de transition vitreuse située entre -50 et -10 °C.

4. Pneumatique conforme à la revendication 1, dans lequel le caoutchouc de styrène-butadiène présente une température de transition vitreuse située entre -30 et -20 °C.

5. Pneumatique conforme à la revendication 1, dans lequel le caoutchouc de styrène-butadiène présente une teneur en groupes vinyle du composant butadiène située entre 20 et 70 %.

6. Pneumatique conforme à la revendication 1, dans lequel la résine présente une masse molaire moyenne en nombre située entre 400 et 2000 g/mol et un indice de polymolécularité inférieur à 3.

7. Pneumatique conforme à la revendication 1, dans lequel la résine présente une température Tv située entre 40 et 100 °C.

8. Pneumatique conforme à la revendication 1, dans lequel la résine présente une température Tv située entre 45 et 85 °C.

9. Pneumatique conforme à la revendication 1, dans lequel la résine est un polylimonène.

**10.** Pneumatique conforme à la revendication 1, dans lequel la résine est une résine d'hydrocarbure.

**11.** Pneumatique conforme à la revendication 1, dans lequel la composition de caoutchouc comprend entre 45 et 65 pcpc de silice de précipitation, hautement dispersible.

**12.** Pneumatique conforme à la revendication 1, dans lequel la composition de caoutchouc comprend entre 10 et 30 pcpc de résine plastifiante.

**13.** Pneumatique conforme à la revendication 1, dans lequel la composition de caoutchouc comprend entre 10 et 25 pcpc de résine plastifiante.

**14.** Pneumatique conforme à la revendication 1, lequel pneumatique est un pneumatique pour automobile ou pour camion léger.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6013718 A

**Non-patent literature cited in the description**

- **R. MILDENBERG ; M. ZANDER ; G. COLLIN.** Hydrocarbon Resins. VCH, 1997

- *The Journal of the American Chemical Society,* February 1938, vol. 60, 309